# EUROPEAN PATENT SPECIFICATION

(11) **EP 2 065 954 B1**
(45) Date of publication and mention of the grant of the patent: **02.05.2012**
(21) Application number: 08400053.8
(22) Date of filing: 26.11.2008
(51) Int. Cl.: H01M 2/26, H01M 10/052, H01M 10/058

(54) **Battery electrode structure**
Batterieelektrodenstruktur
Structure d'électrode de batterie

(30) Priority: 30.11.2007 CN 200720310104 U
(43) Date of publication of application: 03.06.2009
(73) Proprietor: BYD Company Limited, Shenzhen 518118 (CN)
(72) Inventor: Lai, Qing, 518118 Shenzhen (CN); Zhu, Jianhua, 518118 Shenzhen (CN); Shen, Xi, 518118 Shenzhen (CN)
(74) Representative: Steimle, Josef

(56) References cited:
- DE-A1- 10 100 626
- JP-A- 56 167 267
- JP-A- 59 121 778
- US-A- 5 796 588
- US-A1- 2003 129 479
- US-A1- 2004 161 669
- US-A1- 2006 088 761

## Description

This application claims priority to Chinese Patent Application No. 200720310104.8, filed November 30, 2007.

The embodiments of the present invention relate to batteries, more specifically, to an electrode structure for lithium secondary batteries.

For environmental and energy reasons, traditional vehicles that burn fossil fuels are slowly being phased out in favor of hybrid or electric vehicles. For electric vehicles, batteries are the primary sources of power for driving these machines. As such, the safety performance and current output characteristics of the batteries are crucial to the operation of such vehicles. For a single cell, the design of an electrode structure is critical in determining the output of the electrical current, and can effectively influence the rate of discharge and other safety aspect of the battery. Thus, the design of the electrode structure can greatly impact the electrical performance of the battery and the overall operation and performance of the electric vehicle as well as other electrical devices.

The electrode structure currently used in most batteries has an electrode tab fastened to an electrode lead using screws, rivets or other mechanical means. These techniques, however, lead to increased internal resistance because of the poor contact between the electrode tab and electrode lead and as such, are not conducive to improving the battery's current output.

The published patent application US 2003/0129479 A1 discloses an electrolytic secondary cell having a strip-like electrode.

The published patent application US 2006/0088761 A1 discloses a battery module that has a plurality of flat cells.

The patent US 5,769,588 discloses an electrical apparatus containing batteries mounted on a printed circuit board.

In DE 101 00 626 A1, a Lithium-Ion battery is described which includes a stack of electrodes which are inserted with their top parts into a channel-like ditch of an electrode clamp.

In JP 56 167267, a lead acid battery is disclosed.

JP 59 121778 discloses a manufacturing method for a battery.

The published patent application US 2004/0161669 A1 discloses a battery electrode assembly for use in small high performance batteries.

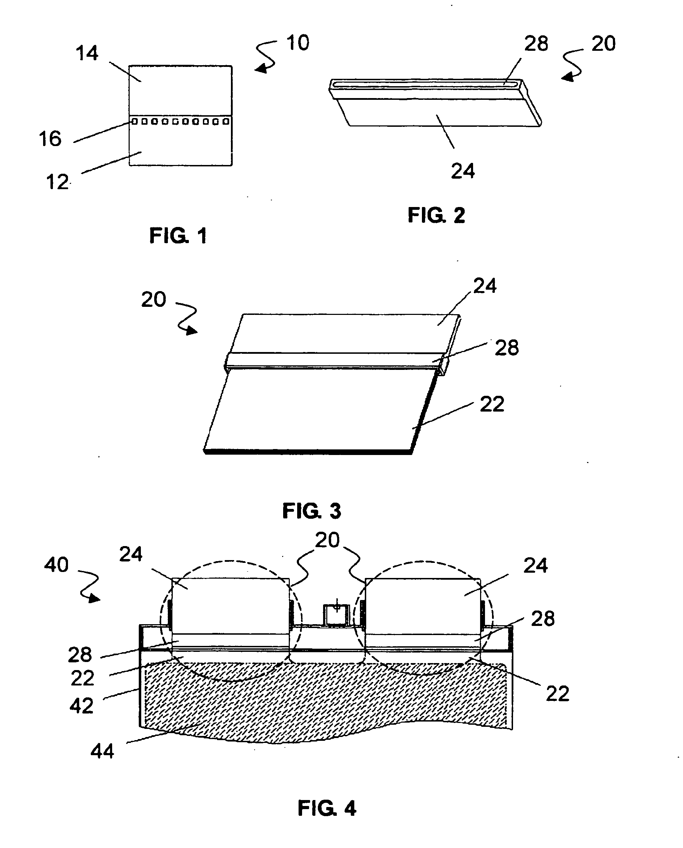

Reference is now made to Fig. 1 illustrating a prior-art electrode structure 10 for a laminated battery. The electrode structure 10 includes an electrode tab 12 coupled to an electrode lead 14, the coupling facilitated by multiple sintering or welding spots 16 as shown in the figure. Compared to electrode structures with mechanical fixtures, the welding leads to increased contact between the electrode tab 12 and the electrode lead 14 thus effectively lowers the internal resistance and increases the amount of battery current output and improves the battery's current output characteristics. However, in using ultrasonic welding or other welding techniques, because the electrode tab 12 is typically a very thin piece of aluminum, metal debris can be produced and can fall on the cell core of the battery thereby internally shorting the electrical circuit. Furthermore, welding can lead to partial hardening and possible fracture between the electrode tab 12 and the electrode lead 14 thus affecting the normal operation, performance and safety of the battery.

As such, there exists a need for a better electrode structure for lithium-ion batteries.

According to the present invention, an electrode structure according to claim 1 and a lithium-ion battery according to claim 5 is provided. Accordingly, a first embodiment of the present invention discloses an electrode structure for a battery comprising: at least one electrode tab; an electrode lead having a recess, the recess adaptable to receive the electrode tab; and a pressurized means configured to couple the electrode tab to the recess. The pressurized means includes hot-pressure treatment, high pressure treatment and mechanical compression. The depth of the electrode tab received within the recess is about 5 to 95 % of the length of the recess. The structure further includes a bonding means for securing the electrode tab to the recess of the electrode lead. The bonding means includes laser welding, ultrasonic welding and electron-beam welding.

A second embodiment of the present invention discloses a lithium-ion battery comprising: an electrolytic solution; a cell core having cathode, anode and separator films; a battery shell configure to house the electrolytic solution and the cell core; and two electrode structures disposed within the battery shell, each electrode structure having: at least one electrode tab; an electrode lead having a recess, the recess adaptable to receive the electrode tab; and a pressurized means configured to couple the electrode tab to the recess. The structure further includes a bonding means for securing the electrode tab to the recess of the electrode lead. In another embodiment, the cathode, separator and anode films of the cell core are configured in a cascading, i.e. stacking arrangement, and wherein the cathode and anode films are each coupled to the at least one electrode tab.

The presently disclosed electrode structure embodiments provide at least one electrode tab being received within a recess of an electrode lead via hot-pressure treatment or mechanical compression. The resulting coupling leads to enhanced electrical contact between the electrode tab and the electrode lead. Unlike traditional electrode structures having rivets, screws and other fasteners for connecting the electrode tab with the electrode lead, the present embodiments provide lowered internal resistance and enhanced current output. Additionally, the electrode tab and the recess can also be bonded with known welding techniques thereby further enhancing electrical connectivity and lowering internal resistance. And because the electrode tab can be protected by the recess and the electrode tab during the welding process resulting in lowered likelihood of metal shavings being produced and hardening phenomena, the presently disclosed electrode structure further ensures that the battery can operate normally and with enhanced safety.

Other variations, embodiments and features of the present invention will become evident from the following detailed description, drawings and claims.
- Fig. 1: illustrates a front view of a prior-art battery electrode structure;
- Fig. 2: illustrates a first perspective view of a battery electrode structure according to the present invention;
- Fig. 3: illustrates a second perspective view of the battery electrode structure; and
- Fig. 4: illustrates a cross-sectional view of a battery incorporating the electrode structure according to the present invention.

It will be appreciated by those of ordinary skill in the art that the invention can be embodied in other specific forms without departing from the spirit or essential character thereof. The presently disclosed embodiments are therefore considered in all respects to be illustrative and not restrictive.

Reference is now made to Figs. 2-3 illustrating two different perspective views of a first embodiment of a battery electrode structure 20 according to the present invention. The electrode structure 20 includes an electrode lead 24 having at least one electrode tab 22, wherein one end of the electrode tab 22 makes electrical contact with a portion of the electrode lead 24. Specifically, the electrical contact between the electrode lead 24 and the electrode tab 22 includes a recess 28, wherein one end of the electrode tab 22 extends into and can be received within the recess 28. Furthermore, the electrode tab 22 and the recess 28 may be coupled together by hot-pressure treatment or other mechanical means.

The depth of the electrode tab 22 within the recess 28 can be about 5 to 95 % of the length of the recess 28. Meanwhile, the length and width of the recess 28 can be substantially similar to that of the electrode tab 22, with the recess 28 being slightly larger than that of the electrode tab 22 to facilitate ease of the electrode tab 22 being inserted into and received by the recess 28.

The coupling between the recess 28 and the electrode tab 22 can incorporate techniques known by one skilled in the art including without limitation hot-pressure treatment or mechanical compression to increase the electrical contact between the electrode tab 22 and the electrode lead 24. In one instance, after hot-pressure treatment the electrode tab 22 and the recess 28 of the electrode lead 24 can still retain sufficient tensile strength. In another instance, after mechanical compression and pinching, the electrode tab 22 coupled to the recess 28 of the electrode lead 24 can be further welded to the recess 28 to further enhance the electrical contact and reduce the internal resistance between the electrode tab 22 and the electrode lead 24. The techniques of welding the electrode tab 22 to the recess 28 can incorporate known methods including without limitation laser welding, ultrasonic welding or electron beam welding. In addition, when the electrode tab 22 has been inserted into the recess 28 of the electrode lead 24 and is being welded to the recess 28, the electrode tab 22 is being protected by the electrode lead 24 and therefore is less likely to produce metal shavings and hardening phenomena thus further ensuring safety and normal operation of the battery.

As discussed above, there can be at least one battery electrode tab 22 in the battery electrode structure 20. In other embodiments, there can be multiple electrode tabs 22 coupled to multiple electrode leads 24. The electrode tab 22 and the electrode lead 24 can incorporate different kinds of conductive materials including without limitation copper, nickel and aluminum. The presently disclosed battery electrode structure 20 can be implemented as a cathode electrode or an anode electrode for a lithium-ion battery.

Reference is now made to Fig. 4 illustrating a cross-sectional view of a battery 40 incorporating the presently disclosed battery electrode structure 20. As shown, the battery 40 includes a battery shell 42, cell core 44, electrolyte and two battery electrode structures 20 representing cathode and anode terminals. The cell core 44 and the electrolyte can be housed within the battery shell 42, with the cell core 44 having a cathode film, an anode film, and a separator film for dividing the positive and negative terminals. Each battery electrode structure 20 includes an electrode lead 24 having at least one electrode tab 22. One end of the electrode tab 22 makes electrical contact with one end of the electrode lead 24, while the opposite end of the electrode tab 22 makes electrical contact with the cathode or anode film within the cell core 44. The opposite end of the electrode lead 24 that does not make contact with the electrode tab 22 extends outside of the battery shell 42. As discussed above, the electrode tab 22 can be coupled to the electrode lead 24 via a recess 28 such that a portion of the electrode tab 22 can be housed and received by the recess 28, and wherein the electrode tab 22 and recess 28 can be coupled by known thermal and mechanical techniques.

The cell core 44 includes cathode, separator, and anode films, whereby the films can be stacked, wounded, cascaded, layered or laminated by known methods in forming the battery. The cathode and anode films are able to be coupled to at least one electrode tab 22, with the electrode structure 20 being welded to the cathode or anode film to provide the desired electrical conductivity.

The composition of the cathode film may include a conductive substrate (sometimes referred to as an electrical collector) coated and/or filled with cathode active substance. The conductive substrate can be fabricated with aluminum or other suitable materials. The cathode active substance includes cathode active materials, adhesives and binder materials, the cathode active materials being LiCoO₂ LiFePO₄, and other suitable cathode active materials for lithium-ion batteries. Likewise, the adhesives and binder materials can include polyvinylidene fluoride (PVDF), polytetrafluoroethylene (PTFE), and the likes. The amount of binder material to be used may be about 0.1 to 8 % relative to the weight of the cathode active materials. However, the amount and concentration of the binder material may be adjusted as can be appreciated by one skilled in the art. Additives including conductive agents may be further added to the cathode active substances, the conductive additive being one or more of the following: acetylene black, conductive carbon black, conductive graphite and other conductive agents known by one skilled in the art. Relative to the cathode active materials, the amount of conductive agent can be about 0 to 15 weight percent.

The composition of the anode film may include a conductive substrate coated and/or filled with anode active substance. The conductive substrate can be fabricated with copper or other suitable materials. The anode active substance includes anode active materials and adhesives or binder materials, the anode active material being selected from suitable anode active materials for lithium-ion batteries including without limitation natural graphite and artificial graphite. Likewise, the adhesive or binder material can include polyvinylidene fluoride (PVDF), polytetrafluoroethylene (PTFE), polyvinyl alcohol and the likes. The amount of binder material to be used may be about 0.01 to 10 % relative to the weight of the anode active material.

Although specific examples are provided for the electrode films, conductive substrates, active materials, adhesives, binder components and conductive additives for both the cathode and anode terminals, it will be understood by one skilled in the art that other materials, compositions and methods of fabricating the lithium-ion battery can be incorporated in the present invention.

A separator film having the ability to insulate and maintain the performance of cathode and anode fluids can be disposed between the cathode and anode films. The nature and types of separators may be those generally used for lithium-ion batteries including without limitation polypropylene felt, vinyl polyethylene felt, polyolefin micro-porous membrane, glass fiber felt or ultra-fine glass fiber felt.

The cathode film can be prepared using techniques understood by one skilled in the art. For example, the cathode active substance and solvent may be mixed to provide cathode slurry, which can subsequently be applied and/or filled on the cathode conductive substrate, dried, with or without die pressing, to produce the desired cathode film. The solvent can be N-methylpyrrolidone (NMP) or dimethylformamide (DMF) with an amount that is about 40 to 90 % of the weight of the cathode active material within the cathode slurry. The slurry can be dried at about 50 to 160°C, the drying and die pressing processes being carried out in suitable fashion.

The anode film can be prepared in a substantially similar method to that of the cathode film with the exception that anode active substance and suitable solvents are used for the anode slurry. The materials and methods of preparing the anode film can utilize those known by one skilled in the art and will not be further elaborated herein.

The electrolytic solutions for the battery can include a mixture of lithium salt electrolyte and non-aqueous organic solvent or other solutions. For example, the lithium salt electrolyte may include one or more of the following: lithium hexafluoro phosphate (LiPF₆), lithium perchlorate, lithium tetrafluoroborate, lithium hexafluoro arsenate, halogenated lithium, lithium chloroaluminate and lithium fluoride alkylation acid. Likewise, the organic solvent may include a mixture of chain ester and ester ring solutions, with the chain ester being dimethyl carbonate (DMC), diethyl carbonate (DEC), ethyl methyl carbonate (EMC), methyl propyl carbonate (MPC), dipropyl carbonate (DPC) and other chain esters containing fluoride, sulfur and unsaturated organic chain esters. The ester ring includes ethylene carbonate (EC), propylene carbonate (PC), vinylene carbonate (VC), g-butyrolactone (g-BL), methyl lactone and other ester ring containing fluoride, sulfur and unsaturated organic ester rings. The concentration of electrolyte that can be injected can be from about 0.1 to 2.0 mol/L.

The battery can be stacked, wounded, laminated or constructed in any suitable fashion as known by one skilled in the art. As such, the processes and methods of going about assembling such battery will not be discussed in further detail. The cathode and anode electrode structures will utilize those of the presently disclosed embodiments, which will be discussed in further detail below.

The following are various battery electrode structures and corresponding batteries incorporating such battery electrode structures.

### EXAMPLE 1

The electrode tab 22 and the electrode lead 24 can be fabricated with aluminum or other metallic materials, the electrode tab 22 being 30 mm in length, 60 mm in width, and 0.016 mm thick with the electrode lead 24 being 35 mm in length, 65 mm in width, and 5.0 mm thick. A recess 28 can be formed within the electrode lead 24, the recess 28 being 61 mm in width, 1.0 mm in length, and 8 mm in depth. Using a LYT-6B semi-automatic hot pressing machine at 75°C and 100 kgf/cm² of pressure, the electrode tab 22 can be mechanically pressed and received within the recess 28 thereby coupling with the electrode lead 24 to produce the battery electrode structure 20. Subsequently, the exterior of the recess 28 can be further welded with a high-power laser welding machine. The process can be repeated to provide two sets of battery electrode structures 20 for the cathode and anode terminals.

### EXAMPLE 2 (BATTERY A)

The battery electrode structures 20 of EXAMPLE 1 can be used to fabricate a laminated battery as follows:

Fabrication of the cathode film - Mix 100 weight portion of cathode active material LiFePO₄, 7 weight portion of conductive additive graphite, 7 weight portion of binder element PVDF in 60 weight portion of NMP to form a paste. Apply the paste uniformly onto an aluminum foil with a thickness of 0.016 mm, bake, compress, and die cut into a 200 mm long, 143 mm wide and 0.125 mm thick cathode film, which contains 7.6 g of cathode active material LiFePO₄. Repeat process to provide 50 cathode films.

Fabrication of the anode film - Mix 100 weight portion of anode active material artificial graphite and 7 weight portion of binder element PTFE in 60 weight portion of NMP to form a paste. Apply the paste uniformly onto a copper foil with a thickness of 0.012 mm, bake, compress, and die cut into a 205 mm long, 148 mm wide and 0.120 mm thickness anode film, which contains 3.6 g of anode active material natural graphite. Repeat process to provide 50 anode films.

Prepare LiPF₆ with EC and DMC to provide LiPF₆ having a concentration of 1 mol / L (volumetric ratio of EC : DMC being 1 : 1) to derive an electrolytic solution, the amount of solution being 11.5 grams.

Separately weld each of the cathode and anode films derived above to electrode tabs 22 of the battery electrode structures 20 of EXAMPLE 1. The 50 cathode films and 50 anode films can be stacked to a width of 155 mm with a 0.040 mm thick polypropylene insulating film dividing the two sides. Position both sets of films into a 230 x 160 x 25 mm battery shell 42, allow the electrode leads 24 to extend outside of the battery shell 42, add the electrolytic solution above, and seal to provide the desired battery.

### EXAMPLE 3

Similar in all respect to EXAMPLE 1 except that the exterior of the recess 28 is not welded with a high-power laser welding machine.

### EXAMPLE 4 (BATTERY B)

Similar in all respect to EXAMPLE 2 except that the battery electrode structures of EXAMPLE 3 are used instead of that of EXAMPLE 1.

### REFERENCE 1

Similar in all respect to EXAMPLE 1 except that no recess is formed within the electrode lead, and the electrode tab and the electrode lead are coupled together using only ultrasonic welding.

### REFERENCE 2

Similar in all respect to EXAMPLE 1 except that no recess is formed within the electrode lead. Furthermore, an aperture can be punched on one end of the electrode lead, while multiple ends of the electrode tab can be similarly hole-punched and coupled with rivets. The multiple hole-punched electrode tab can subsequently be coupled with the hole-punched electrode lead with rivets.

### REFERENCE 3

Similar in all respect to EXAMPLE 1 except that no recess is formed within the electrode lead. Furthermore, a threaded aperture can be formed on one end of the electrode lead, while multiple ends of the electrode tab can form similar threaded apertures and coupled with rivets. The multiple threaded apertures electrode tabs can subsequently be coupled with the aperture-threaded electrode lead with screws.

### REFERENCES 4-6 (BATTERIES C, D and E)

Similar in all respect to EXAMPLE 2 except that the battery electrode structures of REFERENCES 1, 2 and 3, respectively, are used instead of that of EXAMPLE 1.

### BATTERY ELECTRODE STRUCTURE TESTING OF EXAMPLES 1, 3 AND REFERENCE 1-3

Using an intelligent DC low internal resistance measuring instrument, the electrode tab and the electrode lead structures of Examples 1, 3 and References 1-3 are used as internal resistance between the cathode and anode films made in accordance with Example 2. Results are shown below in Table 1.

**TABLE 1. Test results of Examples 1, 3 and References 1-3.**

| Sample | Internal resistance of the cathode electrode (mΩ) | Internal resistance of the anode electrode (mΩ) |
|---|---|---|
| Example 1 | 0.016 | 0.010 |
| Example 3 | 0.042 | 0.012 |
| Reference 1 | 0.019 | 0.015 |
| Reference 2 | 0.040 | 0.017 |
| Reference 3 | 0.041 | 0.023 |

As shown in Table 1, the internal resistance of the anode electrode using the presently disclosed battery electrode structures (Examples 1 and 3) are significantly lower than other technology in existence (References 1-3). On the cathode side, the internal resistance of Example 3 is comparable to that of References 2 and 3 with that of Reference 1 being much lower. However, the internal resistance of Example 1, whether on the anode or cathode side, is clearly lower than all the other samples. Accordingly, the lower the resistance, the better the battery's discharge performance, specifically the discharge rate.

### BATTERY DISCHARGE TESTING OF EXAMPLES 2, 4 AND REFERENCES 4-6

At room temperature of 25 °C or below, separately take the laminated batteries A and B of Examples 2 and 4 (using the battery electrode structures of Examples 1 and 3, respectively) and laminated batteries C, D and E of References 4-6 (using the battery electrode structures of References 1-3, respectively), charge each battery at 1 CmA current until the voltage reaches 4.2 V, then charge at constant voltage (4.2 V) until the current reaches 0.02 CmA. Wait 5 minutes, discharge the battery at 0.2 CmA current until the voltage drops to 2.75 V. Wait another 5 minutes until the battery reaches room temperature, record the battery's discharge capacity at 0.2 CmA until the voltage drops to 2.75 V. Repeat the steps described above at 1 CmA, 3 CmA and 5CmA constant current discharge, separately record the discharge capacity of the batteries at room temperature at 1 CmA, 3 CmA and 5 CmA current discharge until the voltage drops to 2.75 V. Calculate the different battery discharge capacity ratios at the different currents. The higher the discharge capacity ratio, the better the discharge performance of the battery.

Results are shown below in Table 2.

**TABLE 2. Test results of Examples 2, 4, and References 4-6.**

| Sample | Battery discharge capacity ratio (%) | | |
|---|---|---|---|
| | 1 C / 0.2 C | 3 C / 0.2 C | 5 C / 0.2 C |
| Example 2 (Laminated battery A) | 98.96 | 96.54 | 94.50 |
| Example 4 (Laminated battery B) | 96.48 | 94.69 | 92.45 |
| Reference 4 (Laminated battery C) | 97.36 | 95.25 | 93.56 |
| Reference 5 (Laminated battery D) | 95.89 | 93.78 | 91.58 |
| Reference 6 (Laminated battery E) | 95.21 | 92.10 | 89.52 |

As shown in Table 2, laminated battery A (Example 2 using electrode structure of Example 1) has clearly better discharge capacity ratio than laminated batteries C-E (References 4-6 using electrode structures of References 1-3, respectively). And although laminated battery B (Example 4 using electrode structure of Example 3) does not have better discharge capacity ratio than laminated battery C, battery B still has better discharge capacity ratio than batteries D and E indicating that the electrode structure embodiments of the present invention, in general, provides batteries with better discharge performance.

Although the invention has been described in detail with reference to several embodiments, additional variations and modifications exist within the scope of the invention as described and defined in the following claims.

## Claims

1. An electrode structure (20) for a battery (40) comprising:
at least one electrode tab (22);
an electrode lead (24) having a recess (28), the recess (28) adaptable to receive the electrode tab (22); wherein the electrode tab (22) is coupled to the recess (28) by pressure to increase the electrical contact between the electrode tab (22) and the electrode lead (24), and the electrode tab (22) is further bonded to the electrode lead (24) for securing the electrode tab (22) to the recess (28) of the electrode lead (24), **characterized in that** the recess (28) has a form of an elongated cavity which surrounds the end portion of the tab (22).

2. The structure (20) of claim 1, wherein the electrode tab (22) is coupled to the recess (28) by pressure with pressurized means including hot-pressure treatment, high pressure treatment and mechanical compression.

3. The structure (20) of claim 1 or 2, wherein the depth of the electrode tab (22) received within the recess (28) is about 5 to 95 % of the length of the recess (28).

4. The structure (20) of claim 1, wherein the electrode tab (22) is bonded to the electrode lead (24) by bonding means including laser welding, ultrasonic welding and electron-beam welding.

5. A lithium-ion battery (40) comprising:
an electrolytic solution;
a cell core (44) having cathode, anode and separator films;
a battery shell (42) configure to house the electrolytic solution and the cell core (44); and
two electrode structures (20) disposed within the battery shell (42), each electrode structure (20) having:
at least one electrode tab (22);
an electrode lead (24) having a recess (28), the recess (28) adaptable to receive the electrode tab (22); wherein the electrode tab (22) is coupled to the recess (28) by pressure to increase the electrical contact between the electrode tab (22) and the electrode lead (24), and the electrode tab (22) is further bonded to the electrode lead (24) for securing the electrode tab (22) to the recess (28) of the electrode lead (24), **characterized in that** the recess (28) has a form of an elongated cavity which surrounds the end portion of the tab (22).

6. The battery (40) of claim 5, wherein the pressurized means includes hot-pressure treatment, high pressure treatment and mechanical compression.

7. The battery (40) of claim 5 or 6, wherein the depth of the electrode tab (22) received within the recess (28) is about 5 to 95 % of the length of the recess (28).

8. The battery (40) of any one of claims 5 to 7, wherein the cathode, separator and anode films of the cell core (44) are configured in a stacked arrangement, and wherein the cathode and anode films are each coupled to the at least one electrode tab (22).

9. The battery (40) of claim 5, wherein the electrode tab (22) is bonded to the electrode lead (24) by bonding means including laser welding, ultrasonic welding and electron-beam welding.

## Patentansprüche

1. Elektrodenstruktur (20) für eine Batterie (40) umfassend:
mindestens eine Elektrodenfahne (22);
eine Elektrodenleitung (24) mit einer Ausnehmung (28), wobei die Ausnehmung (28) angepasst ist, die Elektrodenfahne (22) aufzunehmen, wobei die Elektrodenfahne (22) durch Druck mit der Ausnehmung (28) verbunden ist, um den elektrischen Kontakt zwischen der Elektrodenfahne (22) und der Elektrodenleitung (24) zu erhöhen, und die Elektrodenfahne (22) ist ferner mit der Elektrodenleitung (24) gebondet, um die Elektrodenfahne (22) an der Ausnehmung (28) der Elektrodenleitung (24) zu befestigen, **dadurch gekennzeichnet, dass** die Ausnehmung (28) die Form eines länglichen Hohlraums hat, der den Endabschnitt der Fahne (22) umgibt.

2. Struktur (20) nach Anspruch 1, wobei die Elektrodenfahne (22) mit der Ausnehmung (28) durch Druck mit druckbeaufschlagten Mitteln verbunden ist, einschließlich Heißdruck-Behandlung, Hochdruck-Behandlung und mechanischer Kompression.

3. Struktur (20) nach Anspruch 1 oder 2, wobei die Tiefe der in der Ausnehmung (28) aufgenommenen Elektrodenfahne (22) etwa 5 bis 95% der Länge der Ausnehmung (28) entspricht.

4. Struktur (20) nach Anspruch 1, wobei die Elektrodenfahne (22) mit der Elektrodenleitung (24) durch Bondierungsmittel einschließlich Laserschweißen, Ultraschallschweißen und Elektronenstrahlschweißen gebondet ist.

5. Lithium-Ionen-Batterie (40), umfassend:
eine Elektrolytlösung;
einen Zellkern (44), umfassend eine Kathode, eine Anode und Trennfolien;
ein Batteriegehäuse (42), das ausgelegt ist, die Elektrolytlösung und den Zellkern (44) aufzunehmen; und
zwei innerhalb des Batteriegehäuses (42) angeordnete Elektrodenstrukturen (20), jede Elektrodenstruktur (20) umfassend:
mindestens eine Elektrodenfahne (22);
eine Elektrodenleitung (24) mit einer Ausnehmung (28), wobei die Ausnehmung (28) angepasst ist, die Elektrodenfahne (22) aufzunehmen, wobei die Elektrodenfahne (22) durch Druck mit der Ausnehmung (28) verbunden ist, um den elektrischen Kontakt zwischen der Elektrodenfahne (22) und der Elektrodenleitung (24) zu erhöhen, und die Elektrodenfahne (22) ist ferner mit der Elektrodenleitung (24) gebondet, um die Elektrodenfahne (22) an der Ausnehmung (28) der Elektrodenleitung (24) zu befestigen, **dadurch gekennzeichnet, dass** die Ausnehmung (28) die Form eines länglichen Hohlraums hat, der den Endabschnitt der Fahne (22) umgibt.

6. Batterie (40) nach Anspruch 5, wobei die druckbeaufschlagten Mittel Heißdruck-Behandlung, Hochdruck-Behandlung und mechanische Kompression umfassen.

7. Batterie (40) nach Anspruch 5 oder 6, wobei die Tiefe der in der Ausnehmung (28) aufgenommenen Elektrodenfahne (22) etwa 5 bis 95% der Länge der Ausnehmung (28) entspricht.

8. Batterie (40) nach einem der Ansprüche 5 bis 7, wobei die Kathode, der Separator und die Anodenfolien des Zellkerns (44) in einer gestapelten Anordnung ausgebildet sind, und wobei die Kathode und die Anodenfolien jeweils mit der mindestens einen Elektrodenfahne (22) verbunden sind.

9. Batterie (40) nach Anspruch 5, wobei die Elektrodenfahne (22) mit der Elektrodenleitung (24) durch Bondierungsmittel einschließlich Laserschweißen, Ultraschallschweißen und Elektronenstrahlschweißen gebondet ist.

## Revendications

1. Structure d'électrode (20) pour une batterie (40) comprenant:
au moins une languette d'électrode (22);
une tige d'électrode (24) présentant un évidement (28), l'évidement (28) étant adaptable pour recevoir la languette d'électrode (22); dans laquelle la languette d'électrode (22) est couplée à l'évidement (28) par pression pour augmenter le contact électrique entre la languette d'électrode (22) et la tige d'électrode (24), et la languette d'électrode (22) est en outre liée à la tige d'électrode (24) pour fixer la languette d'électrode (22) à l'évidement (28) de la tige d'électrode (24), **caractérisée en ce que** l'évidement (28) a la forme d'une cavité allongée qui entoure la partie d'extrémité de la languette (22).

2. Structure (20) selon la revendication 1, dans laquelle la languette d'électrode (22) est couplée à l'évidement (28) par pression avec des moyens sous pression tels que des moyens de traitement sous pression à chaud, de traitement sous haute pression et de compression mécanique.

3. Structure (20) selon la revendication 1 ou 2, dans laquelle la profondeur de la languette d'électrode (22) reçue à l'intérieur de l'évidement (28) est d'environ 5 % à environ 95 % de la longueur de l'évidement (28).

4. Structure (20) selon la revendication 1, dans laquelle la languette d'électrode (22) est liée à la tige d'électrode (24) par des moyens de liaison, tels que des moyens de soudage par faisceau laser, de soudage par ultrasons et de soudage par faisceau d'électrons.

5. Batterie aux lithium-ion (40) comprenant:
une solution électrolytique;
un noyau de cellule (44) ayant des films de cathode, d'anode et de séparation;
une coque de batterie (42) configurée pour loger la solution électrolytique et le noyau de cellule (44); et
deux structures d'électrode (20) disposées à l'intérieur de la coque de batterie (42), chaque structure d'électrode (20) ayant:
au moins une languette d'électrode (22);
une tige d'électrode (24) ayant un évidement (28), l'évidement (28) étant adaptable pour recevoir la languette d'électrode (22), dans laquelle la languette d'électrode (22) est couplée à l'évidement (28) par pression pour augmenter le contact électrique entre la languette d'électrode (22) et la tige d'électrode (24), et la languette d'électrode (22) est en outre liée à la tige d'électrode (24) pour fixer la languette d'électrode (22) à l'évidement (28) de la tige d'électrode (24), **caractérisée en ce que** l'évidement (28) a la forme d'une cavité allongée qui entoure la partie d'extrémité de la languette (22).

6. Batterie (40) selon la revendication 5, dans laquelle les moyens pressurisés comprennent des moyens de traitement sous pression à chaud, de traitement sous haute pression et de compression mécanique.

7. Batterie (40) selon la revendication 5 ou 6, dans laquelle la profondeur de la languette d'électrode (22) reçue à l'intérieur de l'évidement (28) est d'environ 5 à 95 % de la longueur de l'évidement (28).

8. Batterie (40) selon l'une quelconque des revendications 5 à 7, dans laquelle les films de cathode, de séparation et d'anode du noyau de cellule (44) sont configurés dans un agencement empilé, et dans laquelle les films de cathode et d'anode sont chacun couplés à l'au moins une languette d'électrode (22).

9. Batterie (40) selon la revendication 5, dans laquelle la languette d'électrode (22) est liée à la tige d'électrode (24) par des moyens de liaison comprenant des moyens de soudage par faisceau laser, de soudage par ultrasons et un soudage par faisceau d'électrons.
